(19) **Europäisches Patentamt / European Patent Office / Office européen des brevets**

(11) **EP 3 294 915 B1**

(12) **EUROPEAN PATENT SPECIFICATION**

(45) Date of publication and mention
of the grant of the patent:
**06.03.2019 Bulletin 2019/10**

(21) Application number: **16719830.8**

(22) Date of filing: **25.04.2016**

(51) Int Cl.:
**C22B 1/10** *(2006.01)*     **C22B 11/00** *(2006.01)*
**C22B 15/00** *(2006.01)*     **C22B 23/00** *(2006.01)*

(86) International application number:
**PCT/EP2016/059170**

(87) International publication number:
**WO 2016/180624 (17.11.2016 Gazette 2016/46)**

(54) **METHOD FOR PARTIAL ROASTING OF COPPER AND/OR GOLD BEARING CONCENTRATES**

VERFAHREN ZUM PARTIELLEN RÖSTEN VON KUPFER- UND/ODER GOLDHALTIGEN KONZENTRATEN

PROCÉDÉ DE GRILLAGE PARTIEL DE CONCENTRÉS CONTENANT DU CUIVRE ET/OU DE L'OR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.05.2015 DE 102015107435**

(43) Date of publication of application:
**21.03.2018 Bulletin 2018/12**

(73) Proprietor: **Outotec (Finland) Oy**
**02230 Espoo (FI)**

(72) Inventors:
• **CHARITOS, Alexandros**
**60327 Frankfurt am Main (DE)**
• **GÜNTNER, Jochen**
**63796 Kahl (DE)**

• **BUCHMANN, Markus**
**09599 Freiburg (DE)**
• **HAMMERSCHMIDT, Jörg**
**63526 Erlensee (DE)**
• **KÜNSCH, Martin**
**8538 Camorino (CH)**
• **WROBEL, Maciej**
**61184 Karben (DE)**
• **MATTICH, Christian**
**60437 Frankfurt (DE)**

(74) Representative: **Keil & Schaafhausen Patent- und Rechtsanwälte PartGmbB**
**Friedrichstraße 2-6**
**60323 Frankfurt am Main (DE)**

(56) References cited:
**WO-A1-2008/036824     GB-A- 677 050**

**Description**

The invention relates to a process and a plant for the removing of arsenic and/or antimony sulfides from copper, nickel and/or gold containing ore particles, wherein the ore particles are fed into a reactor, wherein the ore particles are heated in the presence of inert particles to a temperature between 500 and 850°C in a fluidized bed and wherein the ore particles are withdrawn from the reactor.

Copper (Cu), Cobalt (Co), nickel (Ni), gold (Au) and Zinc (Zn) are obtained from sulfidic ores. These metals as such represent valuable products which can be processed further in a variety of ways, but must be present in very pure form for this further treatment. This purity is generated by means of pyrometallurgical methods. Pyrometallurgy is understood to be the further thermal treatment of ores or metals obtained already, either by an oxidizing method, i.e. heating with the addition of oxygen, or by a reducing method, i.e. heating in a the presence of a preferably gaseous reductant.

One of the pyrometallurgical methods is partial roasting. Partial roasting is a method to clean the concentrate from arsenic and/or antimony sulfides and thereby produce a suitable raw material for the downstream process steps, e.g. a copper smelter. In the case of copper partial roasting, concentrates e.g. like enargite ($Cu_3AsS_4$) or tennantite ($Cu_{12}As_4S_{12}$), contain significant amount of arsenic that is undesired for downstream pyrometallurgical and hydrometallurgical processing and has to be removed to a great extent. At temperature between 500 and 850 °C, a series of chemical reactions occur resulting to the formation of solid and gaseous compounds, as well as sulfur oxidation. As an example the de-arsenifying reaction of enargite is given below:

$$2Cu_3AsS_4(s) \rightarrow As_2S_3(g) + 3Cu_2S(s) + S_2(g) \text{, } \Delta H^0_{700C} = -48.53\,kJ$$

The bulk of the energy generation comes from sulfur oxidation, however further reactions are exothermic. Sulfur oxidation may occur in ways that include the oxidation of sulfur gas and the oxidation of gaseous or solid sulfides. However, only a part of the sulfur is oxidized. The partial roasting solid product contains typically sulfur percentages in the range of 15- 25 wt.-%, in sulfide form. On the other hand the concentrate feed contains 25- 35 wt.-% sulfur in the sulfide form. After process gas cleaning, sulfuric acid is produced from the sulfur dioxide.

Further, the ore after exiting the reactor, has an arsenic content of below 0,3 wt.-% .Respective mineralogy includes among other chemical compounds such as bornite ($Cu_5FeS_4$), chalcopyrite ($CuFeS_2$), gangue material, magnetite ($Fe_3O_4$), hematite ($Fe_2O_3$), chalcocine ($Cu_2S$), pyrrhotine (FeS), minor amounts of iron-arsenates and minerals associated to the composition of the concentrate fed to the roaster. The total arsenic content depends on elements which got the tendency to form arsenates. If the concentrate also comprises mercury, the off-gas can be treated through the so called Calomel process. Details of all these reactions are found amongst others in the articles "Physico-chemistry and Kinetics Mechanisms of Partial Roasting of High - Arsenic Copper Concentrates", of I. Wilkomirsky I., R. Parra, F. Parra, and E. Balladares at Copper 2013, Santiago, Chile and in "Development of partial roasting technology for arsenic containing copper concentrates" of A. Holmstrom, G. Berg and M. Andersson at Copper 2013, Santiago, Chile.

One of the main problems in partial roasting is sintering. Sintering is a result of the formation of phases being in the "melted" condition which may be induced through hot spots due to local sulfur oxidation, accompanied by insufficient local heat transfer to the rest of the fluidized bed, or through increased compound concentration leading to "melted phases" even at normal process temperatures.

A further mechanism involves continuous particle growth as a result of intra-particle reactions of ore particles. Hence, formation of "melted phases", con-tinous particle growth is a function of the relationship of ore/calcine to chemically inert material, while the formation of hot-spots is particularly of concern within the areas where oxygen is introduced. Thereby, sintering is mostly associated to (i) the vicinity of the reactor nozzle grid (ii) hot-shutdowns of the reactor, where the fluidization air is stopped, because the concentration of potential compounds forming melting phases is maximized, while no motion of the particles exist and (iii) start-up procedures since the system is prone to hot-spots during the transition from a fixed bed to the fluidized bed state.

WO 2008/036824 A1 describes a fluidized bed reactor wherein metal ores and concentrates are treated with microwaves. Thereby, inert particles are added to the bottom of the reactor as a first not fluidized layer.

US 2,650,159 A is directed to a continuous process for roasting finely divided gold-bearing arsenopyrite solids. In the applied reactor ore is fed into a first bed and can pass through a downcomer into a second bed. Said reactor features two horizontal aperture partitions. Between the two beds established in the corresponding partitions, a horizontal and gas_impermeable partition is foreseen (see column 5, line 3 to 18).

So, US 2,650,159 A shows two separate beds with separate fluidized gas injections tough two separate windboxes.

A very similar design is also known from GB 677 050 A.

US 4,626,279 describes a process wherein a copper ore concentrate and gas are supplied to a circulatory fluidized-bed reactor, and heated there to a minimum temperature above the splitting or decomposition temperatures between 600 and 850 °C of the complex minerals containing arsenic and/or antimony sulfides and bismuth present in the concentrate. The oxygen potential in the reactor is regulated, so as to prevent the formation of non-volatile compounds of said impurities. The residence time of the concentrate in the reactor is controlled in a manner to ensure a given minimum elimination of the impurities. The gas and solids are withdrawn from the reactor and passed to a separating means, in which substantially impurity-free solids can be separated from the gas. Neither the given temperature range nor the residence time are to be exceeded in order to avoid sintering of the copper.

From EP 2 652 161 A1 a further process for a partial roasting of copper containing minerals is known which comprises a two-stage roasting process comprising a first roasting step in a first roasting reactor and a second roasting step in a second roasting reactor. A gas mixture is formed from the first process gas component obtained from the first roasting step and from the second process gas component obtained from the second roasting step. Post combustion of the gas mixture takes place in a post combustion chamber. The post combustion operates with said reducing and sulfide rich first process gas component and the second process gas component as oxidizer gas in order to decompose $SO_3$ in the gas mixture to reduce the $SO_3$ content. The risk of accretion formation and corrosion in the post combustion chamber and in subsequent steps is reduced since the first roasting step is performed at a very low oxygen potential. Therefore, a high local reaction rate for the oxidation of sulfur is limited by the available oxygen.

However, the last two methods are very limited in reaction conditions and cause high investment cost for the appropriate apparatus.

For that reason, sintering is avoided in the conventional manner by adding $SiO_2$ particles in the form of sand. The ore particles (fully or partially reacted) are fluidized in a fluidized bed reactor, with an additional sand content. The term "additional sand" refers only to the sand additionally mixed with the concentrate feed and does not refer to the sand already contained within the ore. The additional sand somehow dilutes the ore particles in the fluidized bed, which is conceived as a homogeneous reactor in terms of atmosphere, temperature and solids distribution, and inhibits, therefore, sintering processes. Since, the additional sand helps prevent sintering in the state of the art as a result of dilution it follows that its addition has to be significant. However, the additional sand has a negative impact on a smelter process typically foreseen downstream. Furthermore, dilution of the solids within the reactor may occur as a result of high air flows, which are typical for a circulatory fluidized bed proposed in US 4,626,279. Such units require typically inlet gas velocities of more than 2 m s$^{-1}$ for the fluidizing gas, which result to unit cross-sections allowing for a low solid content, so that achieving the residence times required for achieving an arsenic content below 0.3 wt.-% in the calcine are difficult to be reached.

Therefore, it is the object of the current invention to provide a flexible and economical method and a plant for the partial roasting from copper and/or nickel and/or gold containing ore particles producing a purified ore with very low or without an increased sand/inert content wherein the increase is due to the roasting process.

This problem is solved with a method according to current claim 1. Copper and/or nickel and/or gold containing ore particles are fed into a reactor. Therein, the ore particles and inert particles are fluidized by a fluidizing gas which is injected from the nozzle grid of the reactor. Thereby, a fluidized bed is formed operating at a temperature between 500 and 850 °C, preferably 630 and 720 °C. After spending a specific residence time, the ore particles are withdrawn from the reactor, while respective chemical reactions have been carried out. Most important, the fluidized bed features two zones being arranged above each other with respect to the reactor's height. At least 60 wt-% of the inert particles are in the first zone of the fluidized bed, while at least 60 wt-% of the ore particles are in a second zone above the first zone. The formation of these two zones occurs during steady state reactor operation and is particularly apparent during fluidization gas ramp-down (in cases of controlled shutdowns or plant trips).

The existence of these different zones can be adjusted by different diameters or different densities of the ore particles (as and the inert particles since the particle diameter and densities are sensitive values for the respective minimum fluidization velocities. When considering $SiO_2$ particles in the form of sand as inert material and ore particles it can be noted that the densities of the materials are similar and hence the formation of the aforementioned zones has to be based on the difference in particle size alone. When considering other inert materials having a potentially a greater density than the ore particles, then the density difference may also aid zone formation. The minimum fluidizing velocity accordingly is that velocity which is just so large that the particles are fluidized within a bed. Upon reaching the minimum fluidizing velocity, the bed then is lifted as a whole. This is due to the fact that as a result of the upwardly directed flow of the fluidizing gas the force acting on the individual particles from below is greater than the gravitational force. When the minimum fluidizing velocity is exceeded, the pressure loss of the bed remains constant, since now the gas flows past the fluidized particles. Therefore, with the aid of the Ergun equation (Ergun, S. Fluid flow through packed bed columns, Chemical Engineering Progress, 48, 1954, S. 89-94) the mean fluidizing velocity can be calculated as follows:

$$\frac{\Delta P}{L} = \frac{150(1-\varepsilon)^2}{\varphi_s^2 \varepsilon^3} \frac{\mu U_{mf}}{(d^2_p)} + \frac{1.75(1-\varepsilon)U_{mf}^2 \rho_f}{\varepsilon^3 \varphi_s d_p} \qquad ,$$

wherein:

$\Delta P$:      pressure loss (Pa)
$L$:      height of the fluidized bed (m)
$d_p$:      mean particle diameter (m)
$\rho_f$:      fluid density ($kg/m^3$)
$\mu$:      fluid viscosity ($Ns/m^2$)
$\varphi_S$:      sphericity parameter (dimensionless)
$\varepsilon$:      void fraction (dimensionless)
$U_{mf}$:      minimum fluidizing velocity (m/s)

By lifting the ore particles in a second zone of the fluidized bed and above the first zone formed by inert particles, it is possible to withdraw at least the main part of the ore particles without any additional inert material. Moreover, as noted the formation of these two zones becomes more apparent while ramping down the supply of the fluidization gas to the reactor which results to a "safe" (in terms of sintering potential) short or longer reactor shut down, as explained in the paragraphs below.

In addition, the formation of the two zones mentioned during operation is beneficial for a further reason. Should ore particles clump together, these agglomerates will obtain a higher effective particle size and hence higher weight and, therefore, will sink down from the second zone into the first zone of the fluidized bed. Therein, the inert particles, due to their higher concentration, prevent the already clumped ore particles from sintering as it is well-known.

Furthermore, the formation of the two zones mentioned above results to a more uniform reaction of the oxygen contained within the fluidization gas and the sulfur within the ore particles. This occurs since the oxygen concentration is maximum at the nozzle grid and reduces through the first and second fluidized bed zone, while the sulfur concentration follows the exact opposite trend, i.e. is minimum or zero at the nozzle grid, is higher in the first zone and highest in the second zone. As a result of the more uniform sulfur oxidation, hotspot formation which is the main cause of sintering is avoided. In this context, the first zone of inert substances operates like a form of an isolating layer, while the term inert is used to describe a substance that is not chemically reactive during the partial roasting.

Moreover, such mode of operation protects the furnace from sintering also during planned or unexpected operational stops. Gradual ramp-down of the fluidization gas supply results to a more drastic formation of the two fluidization zones since the reactor velocity becomes close to or smaller than the minimum fluidization velocity of the inert particles (during fluidization gas ramp down) while still being above the corresponding minimum fluidization velocity of the ore particles. Further gas ramp down to the point where inert particles are no longer fluidized with a subsequent abrupt stop of the fluidization gas supply results to a shut down where the first zone contains a maximized inert amount (higher than during steady state operation) thus cannot exhibit sintering during the period where the reactor is not in operation. Moreover, the reactor sintering potential during start-up is also minimized since the vicinity of the nozzles is covered through the first zone which exhibits a maximized inert content. Any "sintering" processes taking place in the second zone are reversed during start-up due to the momentum and resulting vigorous movement of the first zone.

Preferably the diameter of at least 70 wt-%, preferably at least 80 wt-%, of the ore particles is below 60 $\mu$m and/or that the diameter of at least 70 wt-%, preferably 80 wt-%, of the inert particles is between 0,5 to 1.5 mm. Thereby, the two zones are distinctly developed during steady state operation and more drastically during gradual ramp down of the blower during a planned or unplanned shutdown. Furthermore, these are typical sizes for ore and $SiO_2$ particles in the form of sand, which is why no pretreatment is necessary.

It is especially cost effective to use $SiO_2$ particles as inert particles since sand is cheap, readily available and easy to handle. A further possible material is granulated slag.

In addition, a preferred embodiment of the invention provides for an amount of fluidizing gas in a range of 200 to 600 $Nm^3$ $h^{-1}$, preferably 300 to 500 $Nm^3$ $h^{-1}$ per ton of ore particle feed, considered in a dry state. In this context, $Nm^3$ stands for normal cubic meter meaning a cubic meter measured in normal conditions of temperature and pressure. Also this amount of fluidizing gas ensures a fluidized bed with the two zones.

Preferably, the fluidizing velocity is adjusted such that after drying and reducing the sulfur content of the ore particles, they were lifted above the second zone in a so called freeboard zone. Therefrom, the particles can be withdrawn together with the fluidizing gas stream and separated, e.g. with a cyclone.

In a preferred embodiment of the invention, at least more than 50 wt-%, preferably more than 80 wt-% and even more preferably more than 90 wt-% of the ore particles withdrawn from the reactor are withdrawn from a position above the fluidized bed, i.e. the freeboard. Thereby, most of the ore is withdrawn practically without any additional sand content.

Preferably, the remaining ore particles are withdrawn from the fluidized bed through an outlet positioned at about 80 % to 99 % of the overall height of the fluidized bed measured from the reactor's bottom, preferably from the nozzle grid. Thereby, the withdrawing via this overflow is positioned in the height of the second zone, wherein most of the particles are ore particles, provided that no additional sand or other inert material is added to the process, which is the purpose of this invention. If such a material is added, e.g. to counteract inert material attrition, then the extent of the first zone increases up to the overflow, while the second zone consists of a thin layer above the first zone. Hence, in the case of continuous addition of inert material to the reactor, the material exiting through the conduit will be both inert and ore particles. The respective analogy between the inert and ore particles will be determined as a result of the amount of inert solids entering the reactor and the percentage of ore particles exiting through the overflow (the rest of the ore particles exit through the freeboard zone).

As described above, the invention enables an operation of the reactor also with no or minimal additional inert material. However, if a continuous addition of inert material is realized during operation, the final product can be cleaned since the diameter of the ore particles is much smaller than the diameter of the sand. This measure thereby could be separation of ore and sand particles by means of classifying, whereby the ore can be withdrawn without any additional sand content.

Furthermore, it is preferred that above the nozzle grid at the reactor's bottom is covered with sand or inert particles, preferably having a particle size more than 2 mm. Particles with a diameter of more than 2 mm are not fluidized since they are too big. As a result, they build a layer on the reactor's nozzle grid which has function of a membrane for injecting the fluidizing gas. Preferably, this layer is between 5 and 20 cm. The function of this layer can be explained as a membrane layer being permeable for the fluidizing gas coming from the nozzle grid at the reactor's bottom and subsequently proceeding to the fluidized bed with its two zones. Ore particles, therefore, cannot penetrate trough this membrane layer to the nozzle grid. Hence, sintering with the grid nozzles is avoided due to the locally high oxygen concentration is avoided. In addition, the additional membrane layer acts as a porous plate distributor, due to its inherent fixed bed porous structure. Therefore, the fluidizing gas can be injected more uniformly over the reactor, thus avoiding hotspots and minimizing sintering potential.

In another preferred embodiment of the invention, the average residence time of the ore particles in the reactor is between 0,5 to 1 h. Thereby, the arsenic content in the calcined ore is reduced below 0.3 wt.-%.

Preferably, the ore particles are fed to the reactor with a water content between 5 to 10 wt-%, preferably 7 to 8 wt.-% being caused by an upstream filtering of the flotation product. This moisture has the advantage that fresh introduced ore particles sink into the second and first layers of the fluidized bed. During their movement in the bed the particles are dried and, therefore, are getting suspended in the upper layer of the bed and are finally discharged through the bed overflow. This mechanism assures the necessitated residence time. Higher moisture values result in problematic solid dosing, while lower values result to low residence times, since the ore particles tend to instantaneously be entrained to the freeboard or carried out through the bed overflow.

In a preferred embodiment of the invention, ore particles are fed to the reactor with a sulfur content of 25-35 wt-% based on the ore particles in dry state. With such a composition, the claimed process can be performed most effective, since the resulting calcine sulfur content is consistent with the energy balance requirements of the downstream flash smelter.

Using air as a fluidizing gas is preferred since air is a cheap source for the oxygen needed for the partial roasting of the ore. However, it is possible to use nitrogen or any other inert gas, whereby a gas with enriched oxygen content is preferred as well as air after respective oxygen enrichment.

The fluidizing gas is injected into the reactor with a velocity of 0,2 to 2 m s$^{-1}$, preferably 0,5 to 1,5 m s$^{-1}$. Such an inlet velocity of the fluidizing gas ensures the developing of a fluidized bed with two zones as it is the object of the invention, especially for ore particles featuring a diameter of between 20 to 60 $\mu$m and inert particles featuring a diameter between 0,1 to 2 mm.

Sometimes, the used ore itself contains $SiO_2$ or other inert substances whereby no additional inert substances has to be fed to the reactor. However it is also possible to insert inert particles into the reactor continuously. The feeding of the sand can be done via a separate conduit ore together with the feed of the ore particles.

The invention further comprises an apparatus for removing arsenic and/or antimony sulfides from copper, nickel and/or gold containing ore particles with the features of claim 12. Such an apparatus comprises a reactor in which during operation a fluidized bed is formed. The reactor features at least one conduit for feeding the ore particles into the reactor, means for injecting a fluidized gas into the reactor, at least one outlet for withdrawing the ore particles and gas flow from the reactor as well as at least one overflow for withdrawing ore particles from the fluidized bed. It is essential that the outlet is positioned such that during operation it is positioned above the fluidized bed and the overflow is positioned in a position 80 % to 99 % of the overall height of the fluidized bed measured from the reactor's bottom, preferably from the nozzle grid. With this arrangement, ore can be withdrawn with a very little increased $SiO_2$ content.

Further, an apparatus according to the invention is preferably equipped with at least one air tight feeding device(s) for transporting the ore particles from the conduit into the reactor without adding an additional amount of oxygen. Thereby, local hotspots caused by a high sulfur oxidation rate are avoided. A possible feeding device is an air tight slinger belt which discharges material above the fluidized bed level and operates as a spreader over the whole reactor cross - section since the slinger belt consists of a belt rotating at high speed injecting the particles at high velocity. Alternatively, the air tight screw feeder could also be used which would be discharging in or over the fluidized bed surface and would include standard components e.g. screw shaft, casing, motor etc. as well as a gap/solids overflow arrangement between the end of the rotating screw shaft and the entrance to the fluidized bed. The latter arrangement serves the purpose of protecting the rotating screw shaft from high temperature as well as realization of reactions within the screw feeder. A further air tight option would be a rotating scraper located at the reactor dome top below a feeding bin. The distribution of the feed within the fluidized bed cross-sectional area is realized through feed pipes ranging from the roaster roof optimallyup to the fluidized bed cross-sectional area.

In a preferred embodiment of the invention, the fluidizing gas is supplied to a fluidized bed reactor through the so called nozzle grid, a plate which is perforated with 10 - 300 per holes per $m^2$. The holes are filled with grid nozzles which may be of several types including the following: (i) not extending from the nozzle grid and having one orifice in the upward direction (ii) extending above the nozzle having one or more than one orifices at angle between 0 - 180° (iii) a grid nozzles same as the later with an added characteristic of a cap to further protect blocking of the orifices.

Preferably, the apparatus also features an underflow exit from the fluidized bed for withdrawing any oversized material which hinders the operation the first and second fluidized bed layers. Such oversized material may result from calcine particles agglomeration, calcine/inert particle agglomeration, oversized ore/inert particles within the feed from the fluidized bed, wherein the underflow is positioned in a position about at most 20 % of the overall height of the fluidized bed measured from the reactor's nozzle grid.

Fig. 1    shows schematically a roasting reactor according to the state of the art and

Fig. 2    shows schematically a roasting reactor according to the invention.

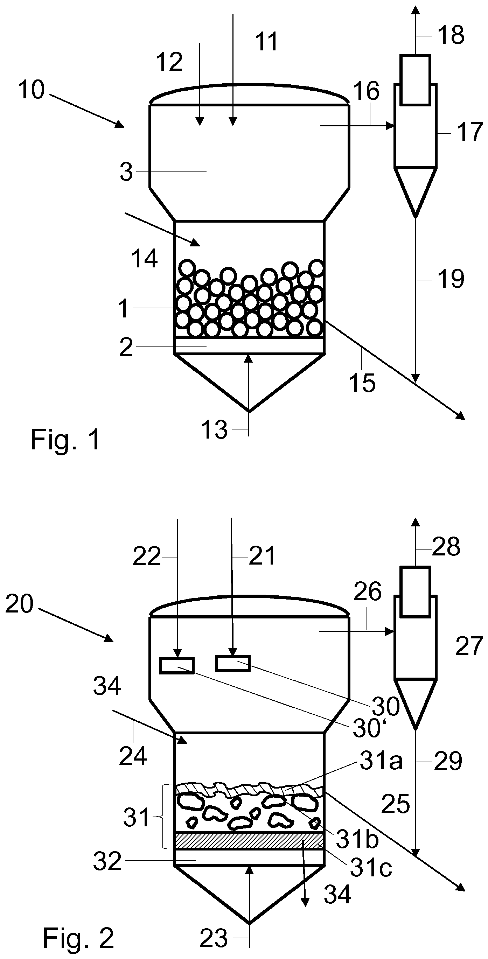

Figure 1 shows a reactor 10 for the partial roasting of copper, nickel and/or gold containing ore particles to remove arsenic and/or antimony sulfides from copper. Via a conduit 11, ore is fed into the reactor 10, while $SiO_2$ particles in the form of sand are fed into the reactor 10 via a conduit 12.

Ore and $SiO_2$ particles in the form of sand form a fluidized bed 1 above a reactor nozzle grid 2 since the particles are fluidized by a fluidizing gas. The fluidizing gas is injected from the reactor nozzle grid 2 via a conduit 13.

Further, it is possible to add additional water content via a conduit 14 to control the reactor temperature.

Via a conduit 15, a mixture of both particles is withdrawn from the fluidized bed 1. Meanwhile, very light particles are transported into a freeboard zone 3 above the fluidizing bed 1. Therefrom, the particles are withdrawn together with the fluidizing gas via a conduit 16.

From conduit 16, the particle/gas mixture is fed into a cyclone 17 in which the particles are separated from the gas stream. The gas stream is discharged from the cyclone 17 via a conduit 18 while the particles are passed into conduit 15 via a conduit 19.

The central problem faced by this roasting reactor are the high additional sand contents of above > 10 wt.-% and as high as 20 wt.-% dry basis which causes an increased volume flow in the further operations stages, a sand contaminated calcined ore and problems regarding the average residence time since the additional sand content requires high velocities of the fluidizing gas.

Operating a reactor as depicted in Figure 1 within a velocity range of 0,5 to 1,5 m s$^{-1}$ for obtaining residence time values in the range of 0,5 - 1 h with an appropriate sand content of up to 10 wt-% with respect to dried ore would lead to a low sand concentration within the fluidized bed, therefore, to too high local ore concentrations. As a result, the sand does not protect the ore particles from sintering reliably.

Figure 2 shows a schematically a reactor 20 according to the invention. Wet ore with a sulfur content of 25 - 35 wt.-% sulfur is introduced into the reactor 20 via a conduit 21. Additional $SiO_2$ particles in the form of sand can be added via conduit 22 if required e.g. in the case of extraordinary inert material attrition. Both conduits 21 and 22 open out into an air tight feeding device 30, 30' for transporting the ore particles into the reactor without any oxygen contact.

The additional $SiO_2$ stream is preferably set to 0 to 3 wt-% of the total weight stream, but in any case below 10 wt-%. Further, the $SiO_2$ particles feature a particle size distribution of 0.1 mm to 2 mm. Instead of additional sand, any other inert material can be used, especially such substances having a particle density similar or larger to that of the ore, namely above 2000 kg/m$^3$. Possible substances are granulated slag from a smelter used in a plant for copper purifying operation.

Air or any other oxidation medium, e.g. air mixed with nitrogen from an air separation unit, is injected via a conduit 23 into the nozzle grid 32 of the reactor 20. Thereby, a fluidized bed 31 with an inlet velocity of the fluidizing gas in the range of 0,5 to 1,5 m s$^{-1}$ and an average residence time of the ore particle of 0,5 to 1 h is established.

Process water is injected via a conduit 24 and used for temperature control of the reactor 20.

An overflow 25 is positioned in a position at least 80 % of the overall height of the fluidized bed 31 measured from the nozzle grid 32 of the reactor 20. Via the outflow, ore particles can be withdrawn from the fluidized bed 31. In a typical reactor, the overflow 25 is placed 0,5 m to 1,5 m above nozzle grid 32.

Further, ore particles are also withdrawn together with the fluidizing gas by an outlet 26 which is positioned such that during operation it is above the fluidized bed in the region of the freeboard. The particles and gas are passed from the outlet 26 into a cyclone 27 wherein gas and particles are separated. The $SO_2$ containing gas is removed via a conduit 28 while the particles are fed into conduit 25 via a conduit 29. An underflow 34 is used to drain of the inert particles from time to time.

According to the idea of the invention, Figure 2 depicts two zones 31 b, 31c and a layer below these two zones 31 a. The operation of the two zones and layer, which leads to the invention success, is explained below:

A fixed bed layer 31a protects the nozzle grid 32 from sintering. Such a zone 31a is created by distributing inert particles before reactor start-up, having a diameter of more than 2 mm, preferably over a layer of 5 - 20 cm above the nozzle grid 32. These particles are fixed and act as an air permeable wall, not allowing sulfur containing calcine to come at the grid nozzle tip. The pressure drop of this layer is low, i.e. in the range of 0.1 - 1 kPa based on the exact granulometry and shape of these particles. Hence, high temperatures at the inlets of the nozzles and corresponding sintering is not possible since no ore particles sink down in this layer 31a. The solid density in this zone is more than 1500 kg m$^3$.

A first zone 31b is rich in inert substances. The first zone 31b is the biggest zone of the fluidized bed 31. Ore with contact to the first zone 31b is prevented from sintering since the content of inert particles, e.g. $SiO_2$ particles in the form of sand is high. Preferred conditions for forming the first zone 31b are the use of the overflow 25, a particle size distribution of inert particles considering 80 wt.-% between 0.5 - 1.5 mm but in any case 100 wt.-% between 0.1 - 2mm, a particle size distribution of the ore considering 80 wt.-% of particles below 60 $\mu$m particles but in any case 100 wt.-% between 0 - 200 $\mu$m, the fluidizing gas velocity within this zone being 0,2 - 2 m s$^{-1}$.

A second zone 31c is rich in ore particles and forms, therefore, a floating calcine layer above the first zone 31b. For obtaining such a second zone, the process parameters already mentioned with regard to the first zone 31b are necessary. Although this zone 31c is rich in calcine with a sintering tendency, the movement of the underlying sand rich layer protects the ore from sintering.

In conclusion, the novel reactor can operate with less than < 10 wt.-% especially 0 - 3 wt.-% added inert substances. Due to the low content of inert particles, the resulting product is of high quality. Further, an average solid residence time of the ore particles in the range of 0.5 - 1 h can be obtained, which are optimum for arsenic removal. Further oxidation mediums can be used instead of air so as to further minder the possibility of creating hotspots during steady state operation or start-up procedures since the heat release within the fluidized bed and the vicinity of the grid nozzles is a function of the oxygen content of the fluidizing gas.

**Example**

The following simple laboratory test depicts the effect of the invention. 800 g of $SiO_2$ particles in the form of sand and 200 g of ore particles are placed within a transparent plexiglass column (diameter: 0,1 m). At the bottom of the column, air is introduced as fluidizing gas whereby its flow is increased gradually. At a velocity above 0.1 m/s only the ore particles are fluidized while the sand remain at the column bottom. Above a fluidizing gas velocity of 0.6 m/s, the $SiO_2$ particles are fluidized, too. Keeping the velocity constant, two zones are formed whereby at least 80 wt-% of the $SiO_2$ particles are found right above the bottom of the column forming a visible first layer whereby at least 80 wt-% of the ore particles are found in a second layer above the first one.

**List of Reference Numerals:**

|    |    |
|----|----|
| 1  | fluidized bed |
| 2  | nozzle grid |
| 3  | freeboard |
| 10 | fluidized-bed reactor |
| 11-16 | conduit |
| 17 | cyclone |
| 18, 19 | conduit |
|    |    |
| 20 | fluidized-bed reactor |
| 21-26 | conduit |

| 27 | cyclone |
| 28, 29 | conduit |
| 30, 30' | air tight feeding device |
| 31 | fluidized bed |
| 31a | fixed layer |
| 31b | first zone |
| 31c | second zone |
| 32 | nozzle grid |
| 33 | freeboard |
| 34 | underflow |

**Claims**

1. Process for removing arsenic and/or antimony sulfides from copper, nickel and/or gold containing ore particles, wherein the ore particles are fed into a reactor, wherein a fluidizing gas is injected into the reactor to form a fluidized bed containing at least a portion of the ore particles and of the inert particles, wherein the ore particles are heated in the presence of inert particles to a temperature between 500 and 850 °C and wherein the ore particles are withdrawn from the reactor, **characterized in that** at least 60 wt-% of the inert particles form a first zone of the fluidized bed and that at least 60 wt-% of the ore particles form a second zone above the first zone.

2. Process according to claim 1, **characterized in that** the diameter of at least 70 wt-% of the ore particles is smaller than 60 $\mu$m and/or that the diameter of at least 70 wt-% of the inert particles is between 0,5 to 1.5 mm.

3. Process according to claim 1 or 2, **characterized in that** the inert particles are $SiO_2$ particles.

4. Process according to any of the preceding claims, **characterized in that** at least more than 50 wt-%, preferably more than 80 wt-% and even more preferably more than 90 wt-% of the ore particles withdrawn from the reactor are withdrawn from a position above the fluidized bed.

5. Process according to claim 4, **characterized in that** the remaining ore particles are withdrawn from the fluidized bed through an outlet positioned at about at least 80 % of the overall height of the fluidized bed measured from the reactor's bottom.

6. Process according to any of the preceding claims, **characterized in that** a layer of inert particles is situated between the reactor's bottom and fluidizing bed.

7. Process according to any of the preceding claims, **characterized in that** the average residence time of the ore particles in the reactor is between 0,5 to 1 h.

8. Process according to any of the preceding claims, **characterized in that** the ore particles are fed to the reactor with water content between 5 to 10 wt-%.

9. Process according to any of the preceding claims, **characterized in that** the ore particles fed to the reactor have a sulfur content of more than 25 wt-% based on the ore particles in dry state.

10. Process according to any of the preceding claims, **characterized in that** air or any other oxygen containing gas is used as fluidizing gas.

11. Process according to any of the preceding claims, **characterized in that** the fluidizing gas is injected into the reactor with a velocity of 0,2 to 2 m s$^{-1}$.

12. Process according to any of the preceding claims, **characterized in that** inert particles are fed in the reactor continuously.

13. Apparatus for removing arsenic and/or antimony sulfides from copper, nickel and/or gold containing ore particles, comprising a reactor (20) in which during operation a fluidized bed (31) is formed, with at least one conduit (21) for feeding the ore particles into the reactor (20), means (23) for injecting a fluidized gas into the reactor (20), at least one outlet (26) for withdrawing the ore particles from the reactor (20), wherein the outlet (26) is positioned such that during operation it is positioned above the fluidized bed (31), and with an overflow (25) for withdrawing ore particles from the fluidized bed (31), wherein the overflow (25) is positioned in a position at least 80 % of the overall height of the fluidized bed (31) measured from the bottom of the reactor (20).

14. Apparatus according to claim 13, **characterized by** an air tight feeding device (25) for transporting the ore particles from the conduit (21) into the reactor (20).

15. Apparatus according to claim 13 or 14, **characterized by** grid nozzles (32) for injecting the fluidizing gas into the reactor (20).

16. Apparatus according to any of claims 13-15, **characterized by** an underflow (34) for withdrawing ore particles from the fluidized bed (31), wherein the underflow (34) is positioned in a position about at most 20 % of the overall height of the fluidized bed measured from the bottom of the reactor (20).

**Patentansprüche**

1. Verfahren zum Entfernen von Arsen- und/oder Antimonsulfiden aus Kupfer-, Nickel- und/oder Gold enthaltenden Erzpartikeln, wobei die Erzpartikel in einen Reaktor eingespeist werden, wobei ein Fluidisierungsgas in den Reaktor eingedüst wird, um ein Wirbelbett zu bilden, das mindestens einen Teil der Erzpartikel und der inerten Partikel enthält, wobei die Erzpartikel in Gegenwart von inerten Partikeln auf eine Temperatur zwischen 500 und 850 °C erhitzt werden und wobei die Erzpartikel aus dem Reaktor entnommen werden, **dadurch gekennzeichnet, dass** mindestens 60 Gew.-% der inerten Partikel eine erste Zone des Wirbelbettes bilden und dass mindestens 60 Gew.-% der Erzpartikel eine zweite Zone oberhalb der ersten Zone bilden.

2. Verfahren nach Anspruch 1, **dadurch gekennzeichnet, dass** der Durchmesser von mindestens 70 Gew.-% der Erzpartikel kleiner als 60 $\mu$m ist und/oder dass der Durchmesser von mindestens 70 Gew.-% der inerten Teilchen zwischen 0,5 und 1,5 mm liegt.

3. Verfahren nach Anspruch 1 oder 2, **dadurch gekennzeichnet, dass** die inerten Partikel $SiO_2$-Partikel sind.

4. Verfahren nach einem der vorstehenden Ansprüche, **dadurch gekennzeichnet, dass** mindestens mehr als 50 Gew.-%, vorzugsweise mehr als 80 Gew.-% und noch mehr bevorzugt mehr als 90 Gew.-% der aus dem Reaktor entnommenen Erzpartikel aus einer Position oberhalb der Wirbelschicht entnommen werden.

5. Verfahren nach Anspruch 4, **dadurch gekennzeichnet, dass** die verbleibenden Erzpartikel aus dem Wirbelbett durch einen Auslass entnommen werden, der auf etwa 80 % der Gesamthöhe des Wirbelbettes, gemessen vom Boden des Reaktors, positioniert ist.

6. Verfahren nach einem der vorhergehenden Ansprüche, **dadurch gekennzeichnet, dass** sich eine Schicht aus inerten Partikeln zwischen dem Boden des Reaktors und dem Wirbelbett befindet.

7. Verfahren nach einem der vorstehenden Ansprüche, **dadurch gekennzeichnet, dass** die durchschnittliche Verweilzeit der Erzpartikel im Reaktor zwischen 0,5 und 1 h liegt.

8. Verfahren nach einem der vorstehenden Ansprüche, **dadurch gekennzeichnet, dass** die Erzpartikel dem Reaktor mit einem Wassergehalt zwischen 5 und 10 Gew.-% zugeführt werden.

9. Verfahren nach einem der vorstehenden Ansprüche, **dadurch gekennzeichnet, dass** die dem Reaktor zugeführten Erzpartikel einen Schwefelgehalt von mehr als 25 Gew.-% bezogen auf die Erzpartikel im trockenen Zustand aufweisen,.

10. Verfahren nach einem der vorstehenden Ansprüche, **dadurch gekennzeichnet, dass** als Fluidisierungsgas Luft oder ein anderes sauerstoffhaltiges Gas verwendet wird.

11. Verfahren nach einem der vorstehenden Ansprüche, **dadurch gekennzeichnet, dass** das Fluidisierungsgas mit einer Geschwindigkeit von 0,2 bis 2 m s$^{-1}$ in den Reaktor eingespritzt wird.

**12.** Verfahren nach einem der vorstehenden Ansprüche, **dadurch gekennzeichnet, dass** inerte Partikel kontinuierlich in den Reaktor eingebracht werden.

**13.** Vorrichtung zum Entfernen von Arsen- und/oder Antimonsulfiden aus Kupfer-, Nickel- und/oder Gold enthaltenden Erzpartikeln, umfassend einen Reaktor (20) in dem während des Betriebs ein Wirbelbett (31) gebildet wird, mit mindestens einer Leitung (21) zum Zuführen der Erzpartikel in den Reaktor (20), Mitteln (23) zum Eindüsen eines Fluidisierungsgases in den Reaktor (20), mindestens einem Auslass (16) zum Abziehen der Erzpartikel aus dem Reaktor (20), wobei der Auslass (26) so positioniert ist, dass er während des Betriebs über dem Wirbelbett (31) positioniert ist, und mit einem Überlauf (25) zum Abziehen von Erzpartikeln aus dem Wirbelbett (31), wobei der Überlauf (25) in einer Position positioniert ist, die mindestens 80 % der Gesamthöhe des Wirbelbettes (31) gemessen vom Boden des Reaktors (20) aus beträgt.

**14.** Vorrichtung nach Anspruch 12, **gekennzeichnet durch** eine luftdichte Zufuhrvorrichtung (25) zum Transport der Erzpartikel aus der Leitung (21) in den Reaktor (20).

**15.** Vorrichtung nach Anspruch 12 oder 13, **gekennzeichnet durch** Gitterdüsen (32) zum Einblasen des Fluidisierungsgases in den Reaktor (20).

**16.** Vorrichtung nach einem der Ansprüche 12 bis 14, **gekennzeichnet durch** einen Unterlauf (34) zum Abziehen von Erzpartikeln aus dem Wirbelbett (31), wobei der Unterlauf (34) in einer Position etwa 20 % der Gesamthöhe des Wirbelbettes, gemessen vom Boden des Reaktors (20), positioniert ist.

**Revendications**

**1.** Processus permettant d'éliminer des sulfures d'arsenic et/d'antimoine de particules de minerai contenant du cuivre, du nickel et/ou de l'or, dans lequel les particules de minerai sont alimentées dans un réacteur, dans lequel un gaz de fluidisation est injecté dans le réacteur pour former un lit fluidisé contenant au moins une partie des particules de minerai et des particules inertes, dans lequel les particules de minerai sont chauffées en présence de particules inertes à une température comprise entre 500 et 850 °C et dans lequel les particules de minerai sont retirées du réacteur, **caractérisé en ce qu'**au moins 60 % en poids des particules inertes forment une première zone du lit fluidisé et au moins 60 % en poids des particules de minerai forment une deuxième zone située au-dessus de la première zone.

**2.** Processus selon la revendication 1, **caractérisé en ce que** le diamètre d'au moins 70 % en poids des particules de minerai est inférieur à 60 $\mu$m et/ou que le diamètre d'au moins 70 % en poids des particules inertes est compris entre 0,5 et 1,5 mm.

**3.** Processus selon la revendication 1 ou la revendication 2, **caractérisé en ce que** les particules inertes sont des particules de $SiO_2$.

**4.** Processus selon l'une quelconque des revendications précédentes, **caractérisé en ce qu'**au moins plus de 50 % en poids, de préférence plus de 80 % en poids et encore plus préférablement plus de 90 % en poids des particules de minerai retirées du réacteur sont retirées d'une position située au-dessus du lit fluidisé.

**5.** Processus selon la revendication 4, **caractérisé en ce que** les particules de minerais restantes sont retirées du lit fluidisé grâce à une ouverture située à environ au moins 80 % de la hauteur totale du lit fluidisé mesurée depuis le fond du réacteur.

**6.** Processus selon l'une quelconque des revendications précédentes, **caractérisé en ce qu'**une couche de particules inertes est située entre le fond du réacteur et le lit de fluidisation.

**7.** Processus selon l'une quelconque des revendications précédentes, **caractérisé en ce que** le temps de rétention moyen des particules de minerai dans le réacteur est compris entre 0,5 et 1 heure.

**8.** Processus selon l'une quelconque des revendications précédentes, **caractérisé en ce que** les particules de minerai sont alimentées dans le réacteur avec une teneur en eau comprise entre 5 et 10 % en poids.

9. Processus selon l'une quelconque des revendications précédentes, **caractérisé en ce que** les particules de minerai alimentées dans le réacteur possèdent une teneur en soufre de plus de 25 % en poids en fonction des particules de minerai dans un état sec

10. Processus selon l'une quelconque des revendications précédentes, **caractérisé en ce que** l'air ou tout autre gaz contenant de l'oxygène est utilisé en tant que gaz de fluidisation

11. Processus selon l'une quelconque des revendications précédentes, **caractérisé en ce que** le gaz de fluidisation est injecté dans le réacteur à une vélocité comprise entre 0,2 et 2 m/s.

12. Processus selon l'une quelconque des revendications précédentes, **caractérisé en ce que** les particules inertes sont alimentées dans le réacteur de manière continue.

13. Appareil permettant d'éliminer des sulfures d'arsenic et/ou d'antimoine de particules de minerai contenant du cuivre, du nickel et/ou de l'or, comprenant un réacteur (20) dans lequel pendant son fonctionnement un lit fluidisé (31) est formé, équipé au moins d'un conduit (21) destiné à l'alimentation des particules de minerai dans le réacteur (20), d'un moyen (23) destiné à l'injection d'un gaz fluidisé dans le réacteur (20), au moins d'une sortie (26) destinée au retrait des particules de minerai du réacteur (20), dans lequel la sortie (26) est positionnée de telle sorte que pendant son fonctionnement, elle est positionnée au-dessus du lit fluidisé (31), et équipée d'un système de déversement (25) permettant le retrait de particules de minerai du lit fluidisé (31), dans lequel le système de déversement (25) est positionné dans une position correspondant à au moins 80 % de la hauteur totale du lit fluidisé (31) mesurée depuis le fond du réacteur (20).

14. Appareil selon la revendication, **caractérisé par** un dispositif d'alimentation hermétique à l'air (25) destiné au transport des particules de minerai provenant du conduit (21) vers le réacteur (20).

15. Appareil selon la revendication 13 ou la revendication 14, **caractérisé par** des buses à grille (32) destinées à l'injection du gaz de fluidisation dans le réacteur (20).

16. Appareil selon l'une quelconque des revendications 13 à 15, **caractérisée par** un système de déversement (34) destiné au retrait de particules de minerai provenant du lit fluidisé (31), dans lequel le système de déversement (34) est positionné dans une position correspondant tout au plus à environ 20 % de la hauteur totale du lit fluidisé mesurée depuis le fond du réacteur (20) .

Fig. 1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2008036824 A1
- US 2650159 A
- GB 677050 A
- US 4626279 A
- EP 2652161 A1

### Non-patent literature cited in the description

- **I. WILKOMIRSKY I. ; R. PARRA ; F. PARRA ; E. BALLADARES.** *Physico-chemistry and Kinetics Mechanisms of Partial Roasting of High - Arsenic Copper Concentrates,* 2013
- **A. HOLMSTROM ; G. BERG ; M. ANDERSSON.** *Development of partial roasting technology for arsenic containing copper concentrates,* 2013
- **ERGUN, S.** Fluid flow through packed bed columns. *Chemical Engineering Progress,* 1954, vol. 48, 89-94